Europäisches Patentamt

European Patent Office

Office européen des brevets

(11) Publication number: **0 409 167 A2**

# EUROPEAN PATENT APPLICATION

(21) Application number: **90113683.8**

(22) Date of filing: **17.07.90**

(51) Int. Cl.5: **C01B 33/193**

(30) Priority: **18.07.89 JP 185764/89**
**15.11.89 JP 297145/89**
**21.11.89 JP 302415/89**

(43) Date of publication of application:
**23.01.91 Bulletin 91/04**

(84) Designated Contracting States:
**AT DE FR GB IT SE**

(71) Applicant: **NKK CORPORATION**
**1-2, Marunouchi 1-chome Chiyoda-ku**
**Tokyo 100(JP)**

(72) Inventor: **Mochizuki, Tadashi, c/o Patent &**
**License Dept.pt.**
**NKK Keihin Bldg, 1-1, Minamiwatarida-cho**
**Kawasaki-ku, Kawasaki 210(JP)**
Inventor: **Iwata, Hideo, c/o Patent & License**
**Dept.pt.**
**NKK Keihin Bldg, 1-1, Minamiwatarida-cho**
**Kawasaki-ku, Kawasaki 210(JP)**

(74) Representative: **Hansen, Bernd, Dr.**
**Dipl.-Chem. et al**
**Hoffmann, Eitle & Partner Patent- und**
**Rechtsanwälte Arabellastrasse 4e 4**
**D-8000 München 81(DE)**

(54) **High purity silica and method for producing high purity silica.**

(57) A method for producing high purity silica comprises reacting alkali silicate with mineral acid, the alkali silicate having concentration of 1 to 5 wt.% in terms of $SiO_2$ concentrastion and the mineral acid having concentration of 15 to 40 wt.%.

High purity silica consists essentially of 0.1 ppb of U and Th or less by weight, respectively, and 1 ppm or less of Fe, Al, Ti, Na and K by weight, respectively.

FIG. 1

CONTENT OF IMPURITIES (wt.ppb)

CONCENTRATION OF SODA SILICATE (wt.%)

EP 0 409 167 A2

# HIGH PURITY SILICA AND METHOD FOR PRODUCING HIGH PURITY SILICA

The present invention relates to silica containing little impurities and a method for producing such silica, and more particularly to high purity silica containing extremely little harmful impurities such as U, Th or the like and metallic impurities and a method for producing such silica.

High purity silica is in great demand in the field of electronic components, and higher purity silica is demanded in this field. The content of U and Th as impurities in silica is particularly required to be decreased. Because U and Th radiate $\alpha$-rays, which cause a memory error. U and Th are desired to be perfectly removed from silica which is used for a sealing agent for IC having a high degree of integration. Silica containing 0.1 ppb or less of U and Th by weight is required.

The high purity silica is roughly classified into natural silica and synthetic silica. The natural silica is produced directly from quartz, silica stone or the like. The synthetic silica is produced from silicon halide, silicon alkoxide or alkali silicate. Since the natural silica contains a great amount of U and Th, around 1 ppb of U and Th by weight remains in products obtained by refining. The synthetic silica is fit to decrease the impurities such as U and Th.

There are two sorts of methods for producing the synthetic silica from silicon halide or silicon alkoxide. A first method is a method wherein silicon halide or silicon alkoxide is hydrolyzed, and thereafter fired. A second method is a method wherein silicon halide or silicon alkoxide is caused to undergo a vapor phase cracking. However, since silicon halide and silicon alkoxide are expensive and, at the same time, has corrosiveness and combustibility, a special care has to be given to handling of silicon halide and silicon alkoxide, which greatly increases prices of the products.

The price of alkali silicate as material is low. An inexpensive product can be manufactured by using alkali silicate and exerting ingenuity in the producing process of the sythetic silica. In the method wherein alkali silicate is used as material, contamination of U and Th can be prevented by the use of reagent such as chelating agent to prevent U and Th from mixing in silica during generation of silica. In the method wherein this reagent is used, since the reagent is expensive, the producing cost rises, which makes it difficult to use silica industrially.

As a method for maufacturing high purity silica which takes into consideration the practical use, for example, a method disclosed in a Japanese Patent Publication Laid Open No. 283809/87 is pointed out. In this method, soda silicate having concentration of 30 wt.% in terms of $SiO_2$ is used as material. Said soda si licate is spun into yarn in an acid solution, and a fibrous silica gel is obtained. Impurities are removed from the fibrous silica gel by means of an acid treatment and washing. U and Th in the product obtained are, however, not sufficiently decreased, and the requirement for the content of 0.1 ppb or less by weight of U and Th is not satisfied. This product lacks stability as a filler for the sealing agent of a highly integrated IC.

It is an object of the present invention to provide high purity silica containing extremely little impurities such as U and Th and a method for producing said high purity silica at low cost.

To attain the aforementioned object, the present invention provides a method for producing high purity silica comprising:

reacting alkali silicate with mineral acid, said alkali silicate having concentration of 1 to 5 wt. % in terms of $SiO_2$ concentration and said mineral acid having concentration of 15 to 40 wt.%.

Further, the present invention provides high purity silica consisting essentially of:

0.1 ppb or less of U and Th by weight, respectively; and

1 ppm or less of Fe, Aℓ, Ti, Na and K by weight, respectively.

The above objects and other objects and advantages of the present invention will become apparent from the detailed description which follows, taken in conjunction with the appended drawings.

Fig.1 is a graphical representation showing the relationship between the concentration of material and the content of impurities according to the present invention;

Fig.2 is a graphical representation showing the relationship between the concentration of acid and the content of impurities according to the present invention;

Fig.3 is a graphical representation showing the relationship between the generating condition and the yield according to the present invention;

Fig.4 is a graphical representation showing the relationship between the generating time and the content of U according to the present invention;

Fig.5 is a graphical representation showing the relationship between the generating time and the yield according to the present invention;

Fig.6 is a graphical representation showing the relationship between the firing time and the content of U and Th according to the present invention; and

Fig.7 is a graphical representation showing the relationship between the firing time and the content of Ha, K and Fe according to the present invention.

When alkali silicate is added to mineral acid, silicate ions are dehydrated by condensation, by which sediment of silica is generated. Behaviours of U and Th in the process of generation of the sediment of silica are different depending upon the properties of solution. U and Th are present in the form of soluble carbonate complex ions such as $[UO_2(CO_3)_3]^{4-}$ and $[Th(CO_3)_5]^{6-}$ in alkali solution. U and Th are present in the form of solublle ions such as $UO_2^{2+}$ and $Th^{4+}$ in acid solution. Since those soluble ions transfer into mineral acid, U and Th in alkali silicate decrease. However, U and Th once convert to insoluble chemical compounds such as hydroxide in a transient zone where the solution changes from alkali to acid. Most of the insoluble chemical compounds convert to the aforementioned soluble ions in the media of high content of acid. A very small amount of the insoluble chemical compounds is taken in the network of silica, remaining insoluble, and remains, without being filtered out. It becomes a main cause of contamination by the impurities in silica that the insoluble chemical comounds remain without being filtered out.

The following two points were taken into consideration on the basis of the aforementioned fact:

(a) The lower the concentration of silicate which is represented by the concentration of $SiO_2$ when silica is generated, the smaller the content of U and Th which are taken in silica.

(b) The higher the concentration of mineral acid, the smaller the content of impurities of U and Th.

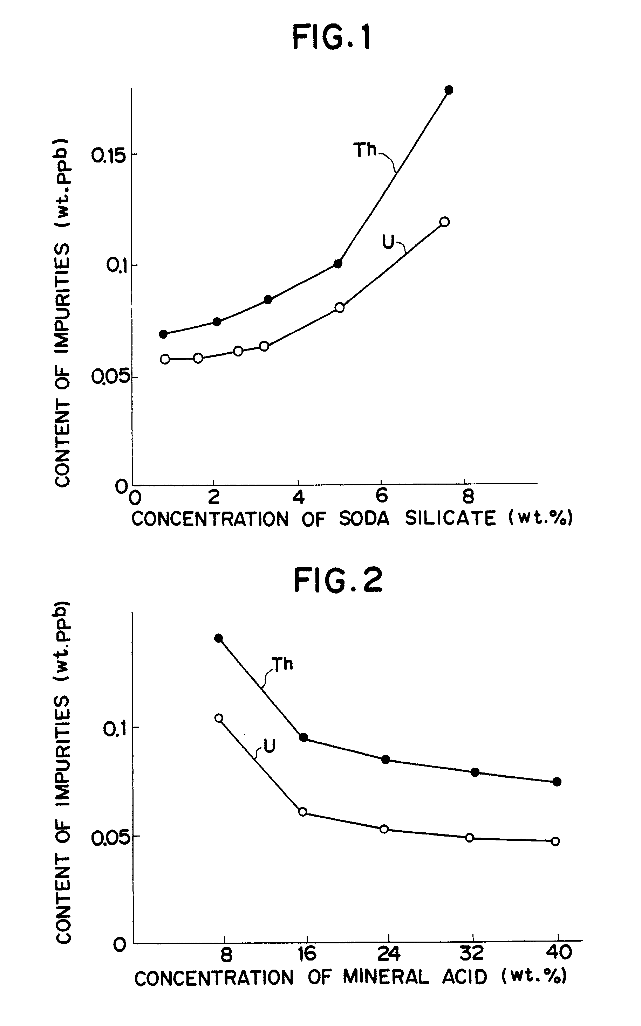

Fig.1 is a graphical representation showing the relationship between the concentration of silicate which is represented by the concentration of $SiO_2$ and the content of impurities. The relationship between the concentration of soda silicate and the content of U and Th in silica generated was studied by changing the concentration of soda silicate as the material on condition that the concentration of an acid mixture is 20 wt.% constantly. The mixed acid was produced by mixing sulfuric acid with nitric acid in the ratio of 1:1. In Fig. 1, the ordinate denotes the content of U and Th and the abscissa the concentration of soda silicate. Symbol ● denotes the case of Th and symbol ○ the cas of U. It is more difficult to remove Th than U. When the concentration of silicate decreases, the content of U and Th decreases together. When the concentration of soda silicate decreases to around 5 wt.%, the concentration of Th decreases to 0.1 ppb by weight. Further, when the concentration of soda silicate is decreased to 1 wt.% or less, the effect of the decrease of the concentration comes to be saturated. Soda silicate, potassium si licate or the like is used as alkali silicate. From the above-mentioned, the concentration of alkali silicate is desired to be 1 to 5 wt.%. The concentration of alkali silicate is preferred to be 2 to 4 wt.%.

Fig.2 is a graphical representation showing the relationship between the concentration of mineral acid and the content of impurities. In Fig.2, the ordinate denotes the content of U and Th and the abscissa the concentration of mineral acid. Symbol ● denotes the case of Th and symbol ○ the case of U. When the concentration of mineral acid is around 15 wt.%, the content of Th being hard to remove is lower than 0.1 ppb by weight. Further, even though the concentration of mineral acid is increased to 40 wt.% or more, the effect of the increase of the concentration of mineral acid does not change much. Nitric acid and sulfuric acid are used as mineral acid. From the above-mentioned, the concentration of mineral acid is desired to be 15 to 40 wt.%. The concentration of mineral acid is preferred to be 24 to 40 wt.%.

In this way, when the concentration of alkali silicate is 5 wt.% or less, and the concentration of mineral acid reacted is determined to be 15 wt.% or more during hydrolysis of alkali silicate with mineral acid, the content of U and Th is 0.1 ppb or less by weight. When the concentration of alkali silicate exceeds 5 wt.%, the content of Th can exceed 0.1 ppb by weight. When the concentration of mineral acid is less than 15 wt.%, the concentration of Th can exceed 0.1 ppb by weight respectively. Further, since the concentration of acid is 15 wt.% or more, simultaneously, impurities such as Fe, Aℓ, Ti, Na and K are dissolved sufficiently into the solution, and filtered out from the sediment of silica. In consequence, the content of the impurities are 1 ppm or less.

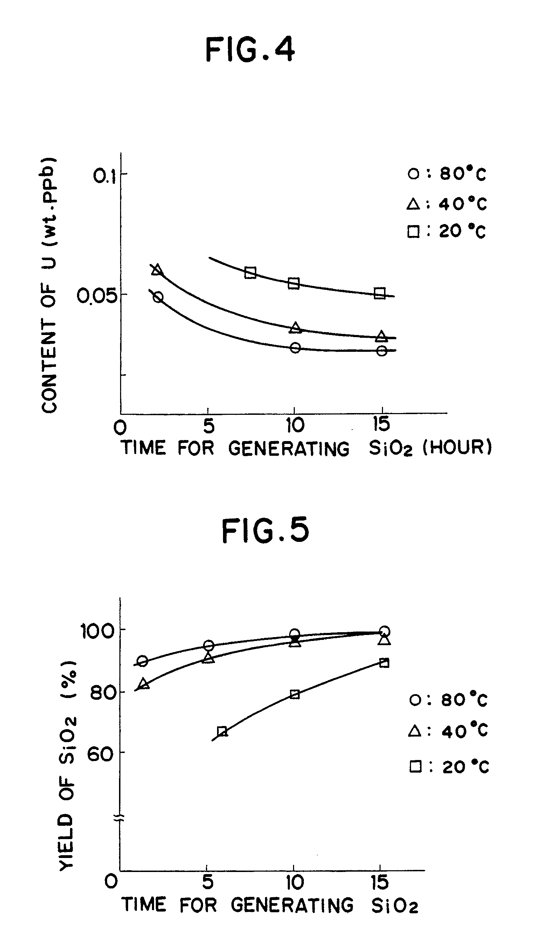

The higher the reaction temperature during the generation of silica, the higher the ability of mineral acid to dissolve the precipitates of impurities. The longer the time for generating silica, the more sufficiently the impurities are removed from the silica. Fig.4 is a graphical representation showing the influence of the reaction temperature and the time of generation on the content of U. Fig.4 is a graphical representation showing the change of the content of U depending on the reaction temperature during the generation of silica and the time of generation of silica. In Fig.4, symbol ○ denotes the case where the reaction temperature is 80°C , symbol △ the case where the reaction temperature is 40°C and symbol □ the case where the reaction temperature 20 °C . The higher the reaction temperature, the more rapid the removal of the impurities. Further, the time of generation of silica influences on the yield of silica. The lower the reaction temperature, the longer the time for increasing the yield of the high purity silica.

Fig.5 is a graphical representation showing the influence of the reaction temperature and the time of generation of silica on the yield of silica. In Fig.5, symbol O denotes the case where the reaction temprature is 80 °C , symbol Δ the case where the reaction temperature is 40 °C and symbol □ the case where the reaction temperature is 20 °C. When the reaction temperature is 80 °C , it takes two hours in order that the yield of silica can exceed 90%. When the reaction temperature is 20 °C , it takes 15 hours to obtain 90% of the yield of silica.

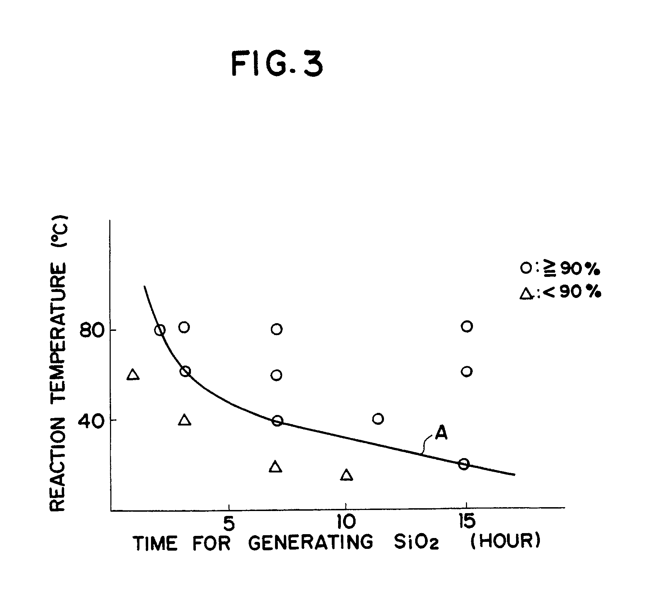

That is, to increase the yield of silica, it is necessary to elevate the reaction temperature during the generation of silica and to make the time of generation of silica longer. The range of conditions for securing 90% of the yield or more is shown in Fig. 3. In Fig. 3, the ordinate denotes the reaction temperature, the abscissa the time of generation of silica, symbol O the case where the yield is 90% or more and symbol Δ the case where the yield is below 90%. The boundary of the zone where symbols O distributed is shown with a curve A. When this curve A is approximated to a numerical formula and a zone where the yield is 90% or more is represented with the numerical formula, the following formula is obtained:

$$t \times T^{1.45} \geq 1150 \qquad [1]$$

where t = time necessary for the generation of silica

T = the reaction temperature ( °C ) during the generation of silica

That is, high purity silica can be generated with 90% or more of the yield in the range of conditions shown by the formula [1].

According to the method described above, the high purity silica containing 0.1 ppb of or less U and Th by weight respectively and 1 ppm or less of Fe, Aℓ, Ti, Na and K by weight respectively can be obtained. It takes a great amount of chemicals and much time to further remove impurities from the aforementioned silica by the use of a wet process, and it is industrially difficult to apply the process to the industrial use. However, when chlorine compound is reacted with impurities at a high temperature, the impurities convert to chlorine compound. This chlorine compound has volatility at a high temperature, which enables a vapor phase separation. When the vapor phase separation is possible, it is theoretically possible that those impurities can be decreased endlessly. That is, U can be decreased to less than 0.05 ppb by weight, Th to less than 0.1 ppb by weight, Fe, Na and K to less than 0.2 ppm by weight respectively, and Aℓ and Ti to 1 ppm or less by weight respectively for an industrially appropriate time by firing silica under an atomosphere of chlorine compound. Inexpensive hydrogen chloride and chlorine as chlorine compound can be used. When a firing temperature is 800 °C or more, the impurities can be decreased in a short time.

Radioactive U and Th are not desired for a highly integrated IC. However, when the content of U is 0.05 ppb or less by weight and the content of Th is 0.1 ppb or less by weight, silica containing such U and Th can be used for the stable sealing agent.

Metallic impurities such as Fe, Na, K, Aℓ and Ti influence on electric conductivity and thermal expansion coefficient of the sealing agents and detriorate physical properties of the sealing agents. Moreover, Fe, Na, K and the like influence chemically on corrosion resistance of the sealing agents for resin and circuits, and deteriorate a circuit-protective function. The filler which cannot deteriorate the electric conductivity, the thermal expansion coefficient and the corrosion resistance of the sealing agents can be obtained by decreasing Fe, Na and K to 0.2 ppm or less by weight and by decreasing Aℓ and Ti to 1 ppm or less by weight.

Example-1

Test No.1 will now be described. 25ℓ of 20 wt.% sulfuric acid was poured into a reaction vessel having a stirrer. Soda silicate of No.3 prescribed in JIS-K-1408 was diluted by distilled water, by which 15 wt.% soda silicate in terms of $SiO_2$ concentration was obtained. 5ℓ of diluted soda silicate was added to 25ℓ of said sulfuric acid being stirred. After soda silicate had been added to said solution of sulfuric acid, the reaction vessel was kept as it was at 60 to 70 °C. After soda silicate had sufficiently reacted with sulfuric acid, sediment of silica was filtered out The sediment of silica was washed with distilled water and sintered at 1200 °C for an hour. The impurities contained in silica were analyzed. U and Th were determined by means of an ICP mass spectrometry method, Fe, Aℓ and Ti by means of an ICP emission spectrometry method and Na and K by means of an atomic absorption spectrometry. The analytical result is shown in Table 1, together with the results of the measurements in other Examples and Control wherein the conditions of acid and alkali silicate were changed.

Tests Nos.2 to 6 show the Examples wherein silica was manufactured in the same way as that of the test No.1 by changing the concentration of acid and the sorts and the concentration of alkali silicate. Tests Nos.7 to 12 show the Examples wherein silica was manufactured in the same way as that of Nos.1 to 6 by using other mineral acid. Control shows the Example wherein silica was manufactured under the conditions beyond the range of the conditions of the present invention relative to the concentration of mineral acid or the concentration of alkali silicate.

In any of the Examples, silica containing 0.1 ppb or less of U and Th by weight respectively was obtained. Silica containing 1 ppm or less of Fe, Aℓ, Ti, Na, K and other impurities by weight respectively was obtained. In Control, however, the content of Th was 0.1 ppb or more by weight, and the content of other impurities was 1 ppm or more by weight. The content of the impurities obtained in the Examples was epochally low compared with the content of impurities contained in silica manufactured by reacting acid with alkali silicate by means of the prior art methods, that is, several tenth ppb of U and Th by weight and several ppm of other impurities by weight. Since the purity of silica manufactured in this way is extremely high, and the content of U and Th is 0.1 ppb or less by weight respectively, a bad influence of α -rays are removed. Moreover, since the content of the impurities such as Fe, Aℓ, Ti, Na and K is very low, physical properties such as heat deformation, heat conductivity, electric conductivity are good.

Table 1

| | N # | Acid | | Alkali Silicate | | Content of Impurities U, Th ( wt.ppb ), other impurities ( wt.ppm ) | | | | | | |
|---|---|---|---|---|---|---|---|---|---|---|---|---|
| | | Sorts | Concentration (wt.%) | Sorts of Alkali | Concentration (wt.%) | T | Th | Fe | Aℓ | Ti | Na | K |
| E # | 1 | Sul. # | 17 | Na | 2.5 | 0.05 | 0.09 | 0.8 | 1.0 | 0.5 | 0.9 | 0.7 |
| | 2 | Sul. | 25 | Na | 2.5 | 0.04 | 0.08 | 0.5 | 0.8 | 0.6 | 0.7 | 0.6 |
| | 3 | Sul. | 21 | Na | 4.3 | 0.06 | 0.09 | 0.7 | 1.0 | 0.8 | 1.0 | 0.4 |
| | 4 | Sul. | 16 | K | 4.5 | 0.06 | 0.09 | 0.8 | 0.9 | 0.7 | 0.7 | 0.9 |
| | 5 | Sul. | 25 | K | 4.5 | 0.05 | 0.09 | 0.6 | 0.8 | 0.6 | 0.7 | 0.9 |
| | 6 | Sul. | 20 | K | 2.0 | 0.06 | 0.08 | 0.5 | 0.8 | 0.6 | 0.5 | 0.8 |
| | 7 | Nit. # | 15 | Na | 4.5 | 0.07 | 0.09 | 0.8 | 0.9 | 0.8 | 0.9 | 0.7 |
| | 8 | Nit. | 25 | Na | 2.0 | 0.04 | 0.07 | 0.5 | 0.7 | 0.4 | 0.7 | 0.5 |
| | 9 | Nit. | 21 | Na | 4.5 | 0.06 | 0.08 | 0.7 | 0.9 | 0.8 | 0.8 | 0.6 |
| | 10 | Nit. | 17 | K | 2.2 | 0.06 | 0.08 | 0.8 | 0.8 | 0.7 | 0.7 | 0.9 |
| | 11 | Nit. | 25 | K | 2.2 | 0.05 | 0.07 | 0.6 | 0.7 | 0.5 | 0.6 | 0.8 |
| | 12 | Nit. | 21 | K | 4.5 | 0.07 | 0.09 | 0.7 | 0.8 | 0.7 | 0.8 | 1.0 |
| C # | 1 | Sul. | 9 | Na | 2.5 | 0.10 | 0.15 | 1.2 | 4.1 | 3.3 | 1.8 | 0.8 |
| | 2 | Sul. | 25 | K | 5.7 | 0.12 | 0.17 | 1.5 | 2.8 | 2.2 | 0.9 | 2.5 |
| | 3 | Nit. | 10 | Na | 2.0 | 0.09 | 0.13 | 1.1 | 3.1 | 3.0 | 1.8 | 0.9 |
| | 4 | Nit. | 25 | K | 5.6 | 0.12 | 0.16 | 1.6 | 2.3 | 1.8 | 1.1 | 1.9 |
| | 5 | Nit. | 13 | K | 5.5 | 0.35 | 0.47 | 2.5 | 5.7 | 4.5 | 2.7 | 3.9 |
| # E: Example | | | | | | | | | | | | |
| C: Control | | | | | | | | | | | | |
| N: Number | | | | | | | | | | | | |
| Sul. : Sulfuric Acid | | | | | | | | | | | | |
| Nit. : Nitric Acid | | | | | | | | | | | | |

Example-2

High purity silica was manufactured in the same way as that in Example-1, and impurities were measured. The yield of silica was studied by changing the reaction temperature and the time of generation during the generation of silica. The time of generation includes both of time necessary for additon of alkali silicate and time, during which solution was kept as it was at a predetermined temperature, being stirred, that is, an ageing time. The result of the tests is shown in Table 2.

In the Example, any of the yields is 90% or more, whereas any of the yields is less than 90% in Control. In the Example, the content of U is 0.04 ppb by weight in average and the content of Th is as low as 0.07 ppb by weight, whereas the content of U increases to 0.06 ppb by weight and the content of Th to 1.0 ppb by weight in Control.

When the yield of 90% or mcre is tried to secure at a temperature of less than 20 $^\circ$C, the time of generation has to be made longer than 15 hours. The higher the time of generation, the smaller the amount of impurities and the higher the yield. However, when the temperature of genaration exceeds 80 $^\circ$C during practical operation, the change of the concentration in solution due to occurence of acid fume and evaporation of water was increased, which made the operation difficult.

Example-3

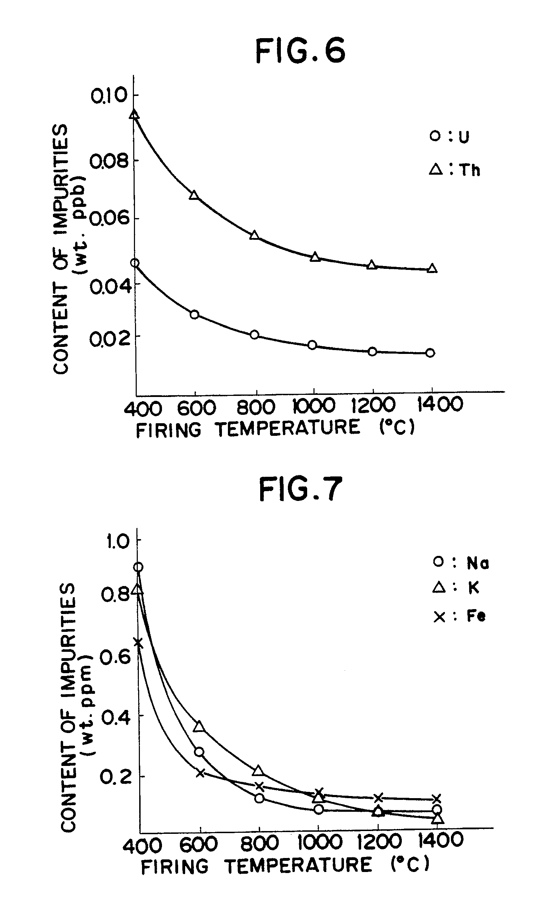

Synthetic silica obtained by reacting 20 wt.% nitric acid with alkali silicate as material was fired by changing a temperature in the range of from 400 to 1400 $^\circ$C, and the content of impurities contained in the synthetic silica was studied. The atmosphere during the sintering was of argon gas containing 10% hydrogen chloride. U and Th were analyzed by means of the ICP mass spectrometric method, Fe, A$\ell$ and Ti by means of the ICP emission spectrometry method, and Na and K by means of the atomic absorption method. The result of tests is shown in Figs.6 and 7. Fig.6 shows the content of U and Th respectively. In Fig. 6, symbol O denotes U and symbol $\Delta$ Th. Fig.7 shows the content of Na, K and Fe respectively. In Fig.7, symbol O denotes Na, symbol $\Delta$ K and symbol x Fe. In Figs.6 and 7, the ordinate denotes the content of the impurities and the abscissa the firing temperature.

The higher the firing temprature, the smaller the amount of any of the impurities. When the firing temperature was 400 $^\circ$C, the content of U was below 0.05 ppb by weight, and the content of Th was below 1 ppb by weight. When the firing temperature was from 600 to 800 $^\circ$C, the content of Na, K and Fe decreased to 0.2 ppm by weight.

Silica obtained by firing at a temperature in the range of from 600 to 800 $^\circ$C was examined by means of a X-ray diffraction and an infrared absorption spectrometry. Any crystalsilica was not seen. Absorption by hydroxyl group was in the range wherein the properties of IC filler was not affected.

Table 2

| | Nos. | Temp.# of Gen.# ( °C ) | Time of Gen.# (hr) | # Nec. Time (hr) | Yield (%) | Content of Impurities U, Th ( wt.ppb ), others ( wt.ppm ) | | | | | | |
|---|---|---|---|---|---|---|---|---|---|---|---|---|
| | | | | | | U | Th | Fe | Aℓ | Ti | Na | K |
| E # | 1 | 80 | 3 | 2 | 97 | 0.03 | 0.07 | 0.8 | 0.6 | 0.8 | 0.8 | 0.7 |
| | 2 | 80 | 7 | 2 | 99 | 0.04 | 0.08 | 1.0 | 0.7 | 0.7 | 0.8 | 0.6 |
| | 3 | 80 | 15 | 2 | 100 | 0.03 | 0.06 | 0.5 | 0.4 | 0.7 | 0.7 | 0.4 |
| | 4 | 60 | 3 | 3 | 92 | 0.05 | 0.08 | 1.0 | 0.9 | 1.0 | 1.0 | 0.7 |
| | 5 | 60 | 7 | 3 | 96 | 0.03 | 0.08 | 0.6 | 0.8 | 0.7 | 0.7 | 0.4 |
| | 6 | 60 | 15 | 3 | 98 | 0.03 | 0.05 | 0.9 | 0.5 | 0.8 | 0.8 | 0.8 |
| | 7 | 20 | 15 | 15 | 90 | 0.05 | 0.10 | 0.5 | 0.8 | 1.0 | 1.0 | 0.7 |
| C | 1 | 40 | 3 | 6 | 73 | 0.06 | 0.13 | 0.9 | 0.9 | 1.0 | 1.0 | 0.8 |
| | 2 | 20 | 0 7 | 15 | 70 | 0.06 | 0.16 | 1.0 | 1.0 | 0.9 | 0.7 | 0.7 |
| # E: Examples | | | | | | | | | | | | |
| C: Controls | | | | | | | | | | | | |
| Temp. : Temperature | | | | | | | | | | | | |
| Nec. : Necessary | | | | | | | | | | | | |
| Gen. : Generation | | | | | | | | | | | | |

Example-4

25ℓ of 20 wt.% sulfuric acid was poured into a reaction vessel having a stirrer. Soda silicate of No.3 prescribed in JIS-K-1408 was diluted by distilled water, by which 15 wt.% soda silicate in terms of $SiO_2$ concentration was obtained. 5ℓ of diluted soda silicate was added to 25ℓ of said sulfuric acid being stirred. After soda silicate had been added to said solution of sulfuric acid, the reaction vessel was kept as it was at 60 to 70°C . After soda silicate had sufficiently reacted with sulfuric acid, sediment of silica was filtered out. Hydrate silica obtained in this way was fired under an atmosphere of argon gas containing 10% hydrogen chloride or under an atmosphere of argon gas containing 1% chlorine at a temperature of 1280 °C for half an hour. Impurities contained inobtained silica were alanyzed in the same way as that of the Example-3. Simultaneously, impurities in the case where the atmosphere was of only argon in Control were analyzed, and the result of the test was compared with that of the Examples. The result of the measurements is shown in Table 3. The content of all of U, Th, Na, K, Fe, Aℓ, Ti, and Mg and Ca was decreased in the Examples in comparison with Control, and, particularly, the content of U, Na, K and Fe was greatly decreased.

Table 3

| Impure Elements | Content # | | |
|---|---|---|---|
| | Examples | | Controls |
| | 10% Hydrogen Chloride | 1% Chlorine | Only Argon Gas |
| U | 0.02 | 0.03 | 0.05 |
| Th | 0.06 | 0.07 | 0.09 |
| Na | 0.15 | 0.18 | 0.80 |
| K | 0.09 | 0.14 | 0.55 |
| Fe | 0.19 | 0.20 | 0.65 |
| Aℓ | 0.6 | 0.7 | 0.9 |
| Ti | 0.4 | 0.4 | 0.7 |
| Mg | 0.03 | 0.03 | 0.09 |
| Ca | 0.05 | 0.04 | 0.11 |
| # U, Th ( wt.ppb ), others ( wt.ppm ) | | | |

**Claims**

1. A method for producing high purity silica, characterized by comprising:
reacting alkali silicate with mineral acid, said alkali silicate having concentration of 1 to 5 wt.% in terms of $SiO_2$ concentration and said mineral acid having concentration of 15 to 40 wt.%.
2. The method of claim 1, characterized in that said alkali silicate has concentration of 2 to 4 wt.% in terms of $SiO_2$ concentration.
3. The method of claim 1, characterized in that said alkali si licate includes sodium silicate and potassium silicate.
4. The method of claim 1, characterized in that said mineral acid has concentration of 24 to 40 wt.%.
5. The method of claim 1, characterized in that said mineral acid includes sulfuric acid, nitric acid and their mixture.
6. The method of claim 1, characterized in that said reacting satisfies a condition of $t \times T^{1.45} \geqq 1150$ when T °C is a temperature during production of silica and t ( hour ) is time necessary for producing silica.
7. The method of claim 1, characterized by further comprising firing said silica under an atmosphere of chlorine compound.
8. The method of claim 7, characterized in that said chlorine compound includes hydrogen chloride and chlorine.
9. High purity silica characterized by consisting essentially of:
0.1 ppb of U and Th or less by weight, respectively; and
1 ppm or less of Fe, Aℓ, Ti, Na and K by weight, respectively.
10. High purity silica of claim 9, characterized in that
said U is of 0.05 ppb or less by weight; and
said Fe, Na and K are of 0.2 ppm or less by weight respectively.

# FIG.1

# FIG.2

# FIG. 3

# FIG.4

# FIG.5

# FIG.6

# FIG.7